**Europäisches Patentamt**

**European Patent Office**

**Office européen des brevets**

(19)

(11) **EP 1 552 970 A1**

(12) **DEMANDE DE BREVET EUROPEEN**

| | |
|---|---|
| (43) Date de publication:<br>**13.07.2005 Bulletin 2005/28** | (51) Int Cl.$^7$: **B60G 17/08** |

(21) Numéro de dépôt: **04290026.6**

(22) Date de dépôt: **07.01.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **Delphi Technologies, Inc.**
**Troy, MI 48007 (US)**

(72) Inventeurs:
• **Oakley, Robin**
  **60800 Trumilly (FR)**

• **Jerome, Simon**
  **60500 Vineuil Saint Firmin (FR)**
• **Annequin, Thierry**
  **60700 Fleurines (FR)**

(74) Mandataire: **Abello, Michel**
  **Cabinet Peuscet,**
  **78, avenue Raymond Poincaré**
  **75116 Paris (FR)**

(54) **Dispositif de suspension à force réglable**

(57)     Procédé de commande d'un actionneur de suspension (5) à force réglable interposé entre un support de roue et la masse suspendue d'un véhicule pour exercer une force verticale réglable, au moins un ressort (7, 8, 10) étant aussi interposé entre ledit support de roue et ladite masse suspendue, ledit procédé comportant les étapes consistant à :

déterminer une force verticale de consigne devant être appliquée entre ladite masse suspendue (2) et au moins ledit support de roue (6),
déterminer un déplacement vertical entre ladite masse suspendue et ledit support de roue, caractérisé par les étapes consistant à :

déterminer une force verticale élastique exercée par ledit au moins un ressort (7, 8, 10) entre ladite masse suspendue et ledit support de roue, calculer une demande de force à fournir par ledit actionneur de suspension en fonction de ladite une force verticale de consigne et de ladite une force verticale élastique.

FIG.1

**Description**

La présente invention se rapporte à un procédé de commande d'un actionneur de suspension à force réglable dans un véhicule automobile et à un dispositif de suspension pour véhicule automobile.

On connaît des véhicules automobiles équipés d'un dispositif de suspension qui modifie la force des actionneurs de suspension en réponse à des signaux de commande produits par une unité de commande à microprocesseur de manière à améliorer le confort et/ou la stabilité d'ensemble du véhicule.

US-A-5510988 décrit un procédé de commande conforme au préambule de la revendication 1 et un dispositif de suspension conforme au préambule de la revendication 7. Dans ce dispositif, on produit des signaux de commande pour les actionneurs de suspension, qui sont des amortisseurs semi-actifs, en réponse aux vitesses relatives entre les roues et la masse suspendue au niveau des quatre coins du véhicule. Le dispositif de suspension tend à réduire des mouvements verticaux de la masse suspendue du véhicule par rapport à une référence statique, selon le principe du « chariot aérien ». Les forces d'amortissement de consigne, aussi appelées demandes d'effort d'amortissement, sont fondées sur des estimations de vitesse absolue de la masse suspendue du véhicule, à savoir la vitesse de pompage, la vitesse angulaire de roulis et la vitesse angulaire de tangage.

Dans ce dispositif, des jambes de force de type Mc Pherson à ressorts sont utilisées. Les forces des ressorts ne sont pas prises en compte dans le calcul des demandes d'effort d'amortissement. Pourtant, il peut exister des situations dynamiques où la force fournie par l'amortisseur n'est pas largement prépondérante sur la force des ressorts, par exemple dans le cas d'un déplacement vertical de forte amplitude de la roue ou dans le cas où le support de roue est couplé à des ressorts relativement raides. Il en résulte une certaine imprécision du contrôle de la masse suspendue.

La présente invention a pour but d'améliorer la commande des actionneurs de suspension dans les situations précitées. L'invention a aussi pour but de fournir un dispositif de suspension pour véhicule améliorant l'assiette de la masse suspendue du véhicule.

Pour cela, l'invention fournit un procédé de commande d'un actionneur de suspension à force réglable dans un véhicule automobile, ledit véhicule comprenant des roues portées par des supports de roue respectifs liés de manière mobile à une masse suspendue dudit véhicule, ledit actionneur de suspension étant interposé entre un desdits supports de roue, par exemple un bras de suspension, et ladite masse suspendue pour exercer une force verticale réglable, au moins un ressort étant aussi interposé entre ledit support de roue et ladite masse suspendue, ledit procédé comportant les étapes consistant à :

déterminer au moins une force verticale de consigne devant être appliquée entre ladite masse suspendue et au moins ledit support de roue pour réduire des mouvements verticaux de ladite masse suspendue du véhicule,
déterminer au moins un déplacement vertical entre ladite masse suspendue et au moins ledit support de roue,

caractérisé par les étapes consistant à :

déterminer, en fonction dudit au moins un déplacement vertical, au moins une force verticale élastique exercée au moins par ledit au moins un ressort entre ladite masse suspendue et au moins ledit support de roue, calculer une demande de force à fournir par ledit actionneur de suspension en fonction de ladite au moins une force verticale de consigne et de ladite au moins une force verticale élastique.

Grâce à ce procédé, on peut prendre en compte l'effet de tout ressort par lequel le support de roue est couplé à la caisse, par exemple un ressort de jambe de force, une barre antiroulis, une articulation élastique et/ou une butée élastique, de sorte l'objectif de réduire les mouvements verticaux de la masse suspendue du véhicule peut être atteint avec plus de précision. On obtient ainsi une meilleure assiette et une meilleure stabilité de la masse suspendue. L'amélioration du contrôle de la masse suspendue est d'autant plus significative que les ressorts sollicités sont raides.

De préférence, ladite au moins une force verticale élastique est déterminée à partir de données de raideur prédéfinies, statiques ou dynamiques, dudit au moins un ressort.

Avantageusement, ledit au moins un ressort inclut une barre anti-roulis couplant ledit support de roue à un support de roue opposé sur le même essieu dudit véhicule, ledit procédé comportant l'étape consistant à déterminer un déplacement vertical entre ledit support de roue opposé et ladite masse suspendue, ladite force verticale élastique exercée par ladite barre anti-roulis étant déterminée en fonction des déplacements verticaux des deux supports de roue. La prise en compte de la barre antiroulis, dont la raideur à l'avant du véhicule est généralement élevée, accentue l'amélioration du contrôle de la masse suspendue dans les mouvements de roulis.

Le déplacement vertical est avantageusement mesuré par un capteur sensible à une distance entre ledit support de roue et ladite masse suspendue. Toutefois, ce déplacement peut aussi être calculé à partir des mesures fournies par des capteurs de vitesse ou des capteurs d'accélération.

De préférence, la demande de force est calculée en fonction de la différence entre une force verticale de consigne devant être appliquée entre ladite masse suspendue et ledit support de roue et une force verticale élastique exercée par ledit au moins un ressort entre ladite masse suspendue et ledit support de roue.

Selon une réalisation particulière de l'invention, ladite au moins une force verticale de consigne et ladite au moins une force verticale élastique sont déterminées de manière modale selon au moins un mode de mouvement prédéterminé de ladite masse suspendue, la demande de force étant calculée en fonction de la différence entre ladite ou chaque force verticale de consigne modale et ladite ou chaque force verticale élastique modale correspondante.

De préférence, l'actionneur de suspension à force réglable est un amortisseur à amortissement réglable, ledit procédé comportant en outre les étapes consistant à :

déterminer le sens de la demande de force,
déterminer le sens de variation de l'élongation de l'amortisseur,
comparer lesdits sens,
régler l'amortisseur en fonction de ladite demande de force uniquement lorsque lesdits sens sont opposés. Lorsque les sens coïncident, on règle de préférence la force d'amortissement de l'amortisseur au minimum.

L'invention fournit également un dispositif de suspension pour un véhicule automobile comprenant des roues portées par des supports de roue respectifs liés de manière mobile à une masse suspendue dudit véhicule, ledit dispositif comprenant :

un actionneur de suspension à force réglable interposé entre un desdits supports de roue et ladite masse suspendue pour exercer une force verticale réglable,
au moins un ressort aussi interposé entre ledit support de roue et ladite masse suspendue,
un capteur sensible à un déplacement vertical entre ladite masse suspendue et ledit support de roue,
et des moyens de commande pour appliquer un signal de commande audit actionneur de suspension, lesdits moyens de commande incluant :

des moyens de détermination de force verticale de consigne pour déterminer au moins une force verticale de consigne devant être appliquée entre ladite masse suspendue et au moins ledit support de roue pour réduire des mouvements verticaux de ladite masse suspendue du véhicule, caractérisé par le fait que lesdits moyens de commande incluent :

des moyens de détermination de force verticale élastique pour déterminer, en fonction dudit déplacement vertical au moins, au moins une force verticale élastique exercée au moins par ledit au moins un ressort entre ladite masse suspendue et au moins ledit support de roue, des moyens de calcul de demande de force pour calculer une demande de force à fournir par ledit actionneur de suspension en fonction de ladite au moins une force verticale de consigne et de ladite au moins une force verticale élastique.

De préférence, les moyens de détermination de force verticale élastique contiennent des données de raideur prédéfinies dudit au moins un ressort.

De préférence, ledit au moins un ressort inclut un ressort monté en parallèle avec ledit actionneur de suspension, tel par exemple qu'un ressort de jambe de force.

Avantageusement, ledit au moins un ressort inclut une barre antiroulis couplant ledit support de roue à un support de roue opposé sur le même essieu dudit véhicule, ledit dispositif comportant en outre un capteur sensible à un déplacement vertical entre ladite masse suspendue et ledit support de roue opposé, lesdits moyens de détermination de force verticale élastique étant aptes à déterminer ladite force verticale élastique exercée par ladite barre antiroulis en fonction des déplacements verticaux des deux supports de roue.

Selon une réalisation particulière de l'invention, ledit actionneur de suspension à force réglable est un amortisseur à amortissement réglable, lesdits moyens de commande incluant en outre un comparateur pour comparer le sens de ladite demande de force et le sens de variation de l'élongation dudit amortisseur, lesdits moyens de commande étant aptes à régler ledit amortisseur en fonction du résultat de ladite comparaison.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

- la figure 1 est une représentation schématique d'un véhicule muni d'un dispositif de suspension selon un mode de réalisation général de l'invention,
- la figure 2 est une représentation fonctionnelle d'une unité de commande embarquée dans le véhicule de la figure 1 selon un premier mode de réalisation du dispositif selon l'invention,
- la figure 3 est un graphique représentant des déplacements verticaux typiques subis par un support de roue et la masse suspendue du véhicule de la figure 1 à la rencontre d'un obstacle et des vitesses correspondantes,
- la figure 4 est un graphique représentant la relation entre la force élastique des ressorts d'une jambe de force du véhicule de la figure 1 et la position verticale relative d'une roue par rapport à la caisse du véhicule,

- la figure 5 est une représentation schématique de la masse suspendue du véhicule illustrant des relations géométriques entre vitesses des zones de coin et vitesses modales,
- la figure 6 est une représentation schématique de la masse suspendue du véhicule illustrant des relations géométriques entre forces modales et forces des actionneurs,
- la figure 7 est une représentation fonctionnelle d'une unité de commande embarquée dans le véhicule de la figure 1 selon un deuxième mode de réalisation du dispositif selon l'invention,
- la figure 8 est une représentation schématique d'un assemblage mécanique entre un support de roue et la caisse d'un véhicule.

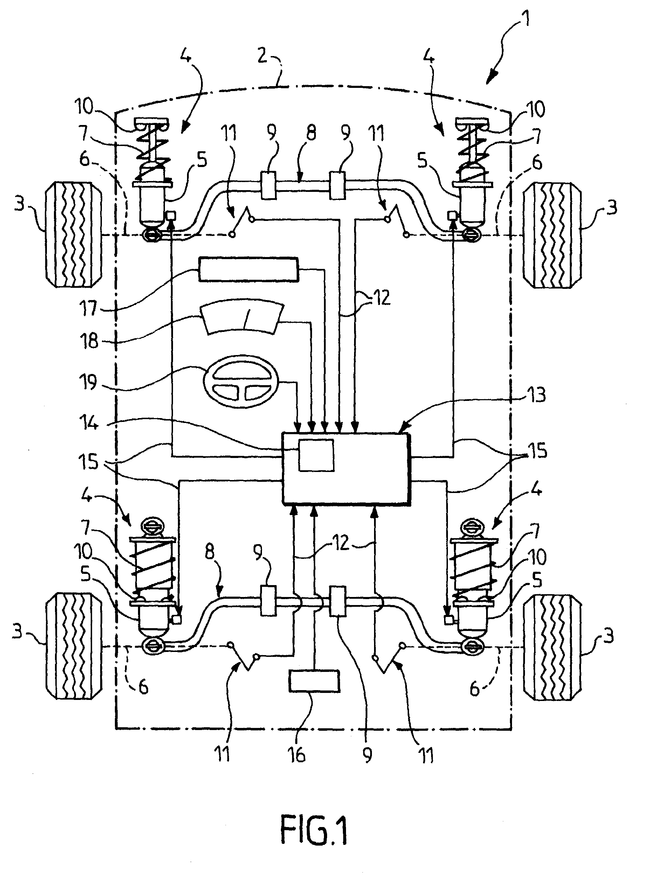

Sur la figure 1, on a représenté un véhicule automobile 1 muni d'un dispositif de suspension semi-actif qui est une modification du dispositif de suspension décrit dans US-A-5510988. Le véhicule 1 comprend une caisse rigide 2 portée de manière suspendue par quatre roues 3 par l'intermédiaire de quatre jambes de force 4 de type connu. Chaque jambe de force 4 comprend un actionneur de suspension 5 à force réglable pouvant être commandé en temps réel, qui est interposé entre une zone de coin de la caisse 2 et un élément de support de roue 6, représenté de manière schématique en trait interrompu. Par exemple, l'élément 6 est un bras inférieur de suspension conventionnel. Par exemple, l'actionneur de suspension 5 est un amortisseur semi-actif à commande électrique à force continûment variable, tel que décrit dans US-A-5282645. De nombreux autres types d'amortisseurs semi-actifs sont connus et conviennent pour la mise en oeuvre de l'invention, comme les amortisseurs à fluide magnéto-rhéologique.

Chaque jambe de force 4 comprend également un ressort hélicoïdal 7 interposé directement ou indirectement entre la caisse 2 et l'élément de support 6 en parallèle avec l'actionneur de suspension 5. Dans l'exemple représenté, le ressort 7 est monté autour de l'actionneur de suspension 5 et contraint entre les deux parties à mouvement relatif de l'actionneur de suspension 5. Chaque jambe de force 4 comprend enfin des butées élastiques de fin de course 10, typiquement en caoutchouc, qui entrent en action lors des débattements de grande amplitude de la jambe de force 4. En plus des butées de fin de course de compression 10, il existe également des butées de fin de course de détente dans le cylindre de l'actionneur de suspension 5.

Chaque essieu du véhicule 1 comporte également une barre antiroulis 8 conventionnelle dont les deux extrémités sont couplées directement ou indirectement aux deux éléments de support 6 mutuellement opposés. La barre antiroulis 8 est par ailleurs liées de manière connue à la caisse 2 au niveau de fixations 9. La configuration et le mode d'assemblage de la jambe de force 4, de l'élément de support 6 et de la barre antiroulis 8 peuvent être de tout type et ne sont donc pas représentés en détail sur la figure 1.

Chaque coin du véhicule 1 comprend un capteur de position 11 qui produit un signal de mesure 12 indiquant la distance verticale relative entre le support de roue 6 et la caisse 2 du véhicule. Par exemple, le capteur 11 inclut un appareil résistif fixé à la caisse 2 au niveau du coin correspondant et un organe de liaison couplé de manière pivotante entre le support de roue 6 et un bras pivotant de l'appareil résistif, lequel produit un signal d'impédance qui varie avec la distance verticale relative entre le support de roue 6 et la caisse 2 du véhicule au niveau du coin correspondant.

Les signaux de mesure 12 des capteurs de position 11 sont entrés dans une unité de commande de suspension 13 munie d'un microprocesseur 14 qui traite ces signaux pour déterminer l'état dynamique de la caisse 2 et engendrer des signaux de commande 15 pour les actionneurs de suspension 5. L'unité de commande 13 transmet ces signaux de commande par des liaisons électriques appropriées en temps réel. Par ailleurs, l'unité de commande 13 peut utiliser d'autres signaux d'entrée, par exemple un signal d'accélération latérale fourni par un capteur 16, un signal de tangage fourni par un capteur 17, un signal de vitesse fourni par un capteur 18 et un signal d'angle de volant de direction fourni par un capteur 19. De tels capteurs sont bien connus.

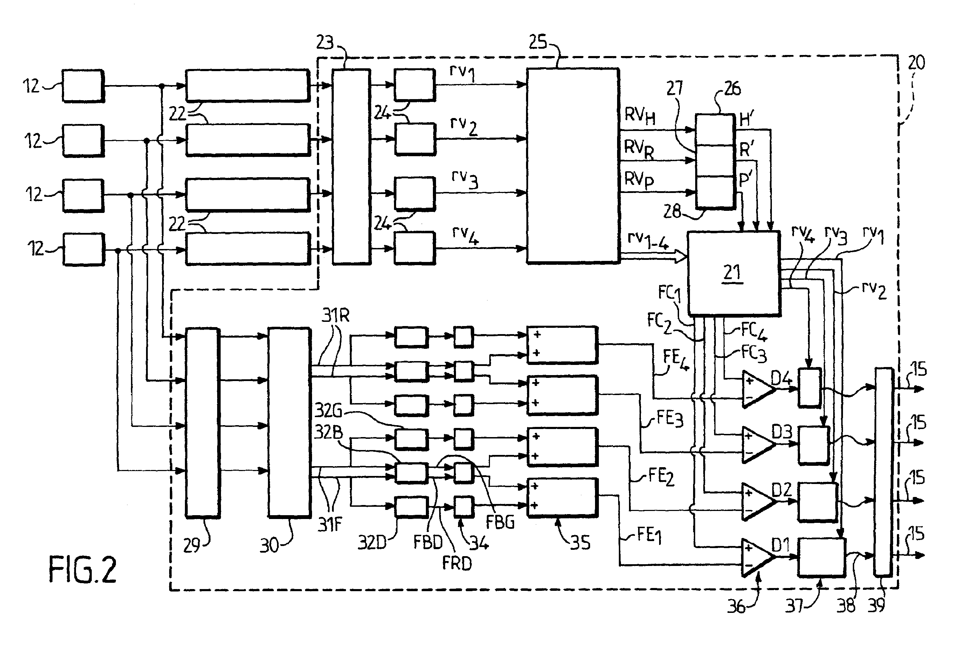

En référence à la figure 2, on décrit ci-dessous un premier mode de réalisation de l'unité de commande de suspension 13. L'unité de commande 13 inclut un microcontrôleur 20 qui est programmé pour exécuter un algorithme de calcul de manière à produire les signaux de commande 15 pour les actionneurs de suspension 5. Cependant, l'unité de commande 13, qui est représentée sous la forme de blocs fonctionnels sur la figure 2, peut être réalisée par toute combinaison appropriée d'éléments de circuit et/ou d'éléments logiciels.

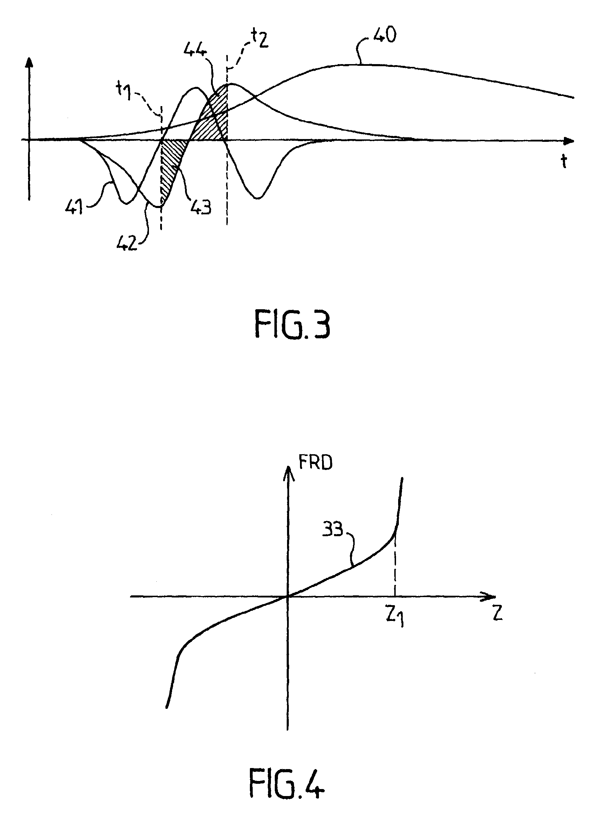

La moitié supérieure de la figure 2 représente une portion de l'unité de commande 13 consacrée au calcul, à partir des signaux 12 fournis par les capteurs de position 11, des forces verticales de consigne $FC_1$ à $FC_4$. Les forces de consigne $FC_1$ à $FC_4$, qui sont produites sous la forme de signaux correspondants au niveau de la sortie du module de calcul des forces de consigne 21, sont des forces que l'on souhaite appliquer entre les éléments de support 6 des roues et la caisse 2, notamment à l'aide des actionneurs de suspension 5. Ces forces de consigne $FC_1$ à $FC_4$ correspondent aux efforts désirés $F_i$ obtenus à l'issue de l'étape 173 représentée sur la figure 4 de US-A-5 510 988. Etant donné que cette partie de l'unité de commande produit les forces de consigne $FC_1$ à $FC_4$ de la même manière que sont calculés les efforts Fi dans US-A-5 510 988, elle sera décrite succinctement ci-dessous.

Les signaux de position 12 des quatre capteurs 11 sont respectivement soumis à un filtrage passe-bas puis à une dérivation temporelle par des circuits analogiques 22.

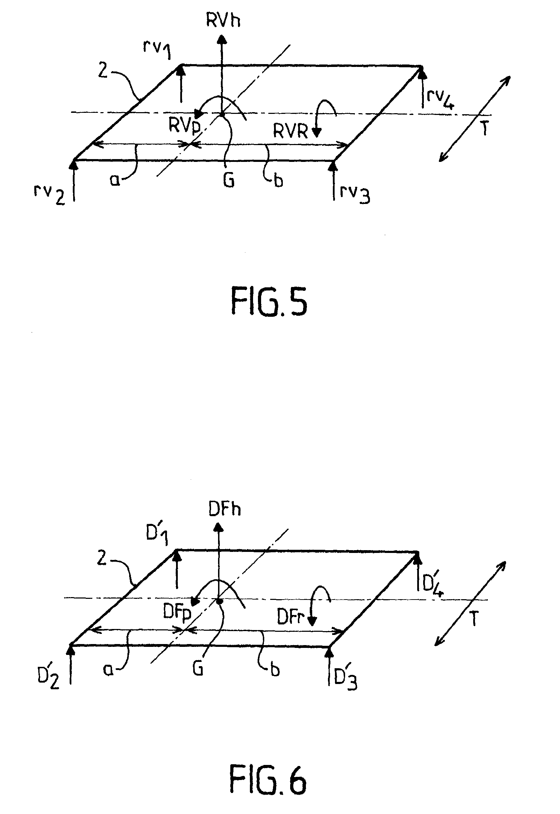

Les signaux de vitesse résultants sont respectivement numérisés par un convertisseur analogique/numérique 23 du microcontrôleur 20, puis soumis à un filtrage passe-haut par des filtres 24 pour supprimer tout décalage continu introduit lors de la numérisation. Les signaux résultants $rv_1$, $rv_2$, $rv_3$ et $rv_4$ représentent respectivement la vitesse verticale relative instantanée entre chaque élément de support de roue 6 et la zone de coin correspondante de la caisse 2. Un module de transformation géométrique 25 convertit les signaux de vitesse relative $rv_1$ à $rv_4$ en signaux de vitesse relative modale de la caisse 2, à savoir un signal de vitesse relative de pompage $RV_H$, un signal de vitesse angulaire relative de roulis $RV_R$, et un signal de vitesse angulaire relative de tangage $RV_P$. En référence à la figure 5, le calcul des vitesses relatives modales de la caisse 2 est effectué conformément aux équations suivantes :

$RV_H=(rv_1+rv_2)*(b/a+b)/2+(rv_3+rv_4)*(a/a+b)/2$, où a désigne la longueur de caisse entre le centre de gravité G et l'axe des roues avant du véhicule et b désigne la longueur de caisse entre le centre de gravité G et l'axe des roues arrière du véhicule.

$RV_R=(rv_1-rv_2+rv_4-rv_3)/2T$, où T désigne la largeur de voie mesurée entre les centres de roue d'un même essieu.

$$RV_P=(rv_3+rv_4-rv_1-rv_2)/(2a+2b).$$

Les signaux de vitesse relative modale $RV_H$, $RV_R$ et $RV_P$ sont respectivement filtrés par des filtres passe-bas numériques 26, 27 et 28 pour obtenir des signaux H', R' et P' corrigés en phase, qui représentent les vitesses modales absolues de la caisse 2 selon les modes de pompage, de roulis et de tangage.

Le module de calcul des forces de consigne 21 utilise les signaux de vitesse absolue H', R' et P' et les signaux de vitesse relative $rv_1$ à $rv_4$ pour calculer les forces de consigne $FC_1$ à $FC_4$. Schématiquement, chaque force de consigne $FC_i$ résulte d'une combinaison linéaire des vitesses modales absolues de la caisse, à savoir ($a_i$ H' + $b_i$ R' + $c_i$ P'), où $a_i$, $b_i$ et $c_i$ sont des gains sélectionnés dans une table (i = 1 à 4).

Sur la figure 2, la partie inférieure de l'unité de commande 13 est consacrée au calcul, à partir des signaux de position 12, de signaux de force élastique $FE_1$ à $FE_4$. Chaque signal de force élastique $FE_i$ représente la force verticale instantanée qu'exerce l'ensemble des ressorts qui agissent entre un des éléments de support de roue 6 et la caisse 2, à savoir dans le mode de réalisation représenté : un ressort 7, une barre de torsion 8 et des butées élastiques 10 à chaque fois.

Un convertisseur analogique/numérique 29 numérise les signaux de position 12. Un module de normalisation 30 traite chaque signal de position 12 de manière à ajouter un décalage continu puis à appliquer un coefficient d'échelle approprié au signal.

Le module de normalisation 30 sert à obtenir, à partir de chaque signal de position 12 mesuré par les capteurs 11, un signal représentant la position verticale de l'élément de support de roue 6 exprimée par rapport à une référence prédéterminée connue fixée par rapport à la caisse 2 et dans une unité de mesure prédéterminée connue. Par exemple, le décalage et le coefficient d'échelle devant être appliqués à chaque signal ont été préalablement mémorisés dans le microcontrôleur 20 sur la chaîne de production du véhicule 1.

Les signaux de position normalisés 31F des roues avant sont transmis à des modules de calcul de force élastique 32D, 32G et 32B. Le module 32D reçoit le signal de position normalisé de l'élément de support de roue 6 avant droit et utilise des données de raideur représentant le comportement élastique du ressort 7 et des butées 10 pour calculer, à partir de ce signal de position, la force verticale exercée par le ressort 7 et les butées 10 entre l'élément de support de roue 6 et la zone de coin correspondante de la caisse 2. La figure 4 illustre schématiquement ce calcul.

Sur la figure 4, l'abscisse Z représente la position normalisée du support de roue 6 par rapport à la caisse 2 et l'ordonnée FRD représente la force verticale élastique. La courbe 33 représente la raideur statique de la combinaison ressort 7 et butées 10. Sur la courbe 33, les butées de fin de course 10 de la jambe de force 4 ne rentrent en action qu'au-delà d'un déplacement $Z_1$, ce qui explique la rupture de pente à ce point. Les données de raideur utilisées par le module 32D consistent par exemple en la courbe 33, ou du moins un échantillonnage approprié de celle-ci. Elles ont été préalablement mémorisées dans le micro contrôleur 20 sur la chaîne de production du véhicule. Ces données de raideur peuvent être déterminées, pour un modèle de véhicule donné, par mesure en laboratoire d'essai.

Une référence de position connue de l'élément de support de roue 6 est nécessaire pour que la courbe de raideur 33 soit utilisable. En revanche, rien n'oblige à fixer cette référence au niveau de la position d'équilibre statique du ressort 7. La référence de position peut être quelconque. En pratique, il est avantageux de fixer la référence de position en soulevant le véhicule du sol au moyen d'un élévateur pour laisser pendre les roues sous leur propre poids. De même, rien n'oblige la courbe de raideur 33 à être symétrique, ni à être linéaire. La courbe de raideur 33 représente de préférence le comportement réel ou le plus réaliste possible du ressort 7 et des butées 10.

Par ailleurs, en variante, des données de raideur dynamique peuvent être utilisées pour tenir compte des changements de comportement des ressorts en fonction de la fréquence de la force excitatrice. Pour cela, les modules 32 seront munis d'entrées supplémentaires pour recevoir les vitesses $rv_i$ nécessaires à la détermination des fréquences correspondantes.

Le module 32G opère de la même manière que l'élément 32D, mais pour l'élément de support de roue 6 avant gauche. Dans le cas où les jambes de force avant sont identiques, les modules 32D et 32G peuvent donc être identiques. Ceci n'est toutefois pas indispensable.

Le module 32B reçoit les signaux de position normalisés 31F des deux éléments de support de roue avant et utilise des données de raideur représentant le comportement élastique de la barre antiroulis 8 avant pour calculer le couple exercé par la barre antiroulis 8 sur la caisse 2. Comme pour les ressorts 7 et les butées 10, les données de raideur correspondantes ont été préalablement mémorisées dans le microcontrôleur 20 sur la chaîne de production du véhicule. Schématiquement, la barre antiroulis avant 8 transmet un couple de roulis à la caisse 2 en réponse aux mouvements différentiels verticaux des deux éléments de support de roue avant 6.

La barre antiroulis 8 n'agit pas nécessairement aux mêmes zones de la caisse 2 que les jambes de force 4. En fait, chaque ressort exerce généralement son effort élastique en un point différent des autres ressorts. Pour qu'on puisse facilement combiner les efforts des différents ressorts agissant sur un support de roue, les modules 32D, 32G et 32B calculent à chaque fois un effort élastique rapporté au niveau du centre de la roue en utilisant des transformations géométriques correspondantes.

Les signaux représentant les forces verticales élastiques FRD, FBG et FBD sont soumis à un filtrage passe-haut pour supprimer toute composante de force continue, pouvant résulter par exemple du fait que le véhicule 1 est lancé dans une courbe constante pendant une durée de plusieurs secondes. En effet, le contrôle des actionneurs de suspension décrit ici vise à réduire des mouvements transitoires de la caisse 2. Pour cela, comme la fréquence de résonance des mouvements de caisse est voisine de 1 Hz en général, la fréquence de coupure du filtrage peut être choisie par exemple entre 0,1 et 0,5 Hz environ. Les signaux filtrés sont ensuite soumis à une correction de phase. Le filtrage passe-haut et la correction de phase sont effectués par des modules 34.

Pour enfin calculer le signal de force élastique $FE_1$, un additionneur 35 somme les signaux représentant les forces verticales FRD et FBD. On obtient ainsi un signal $FE_1$ représentant la force élastique verticale exercée sur la zone de coin avant droite de la caisse 2 par la combinaison des organes élastiques accouplant l'élément de support de roue 6 avant droit à la caisse, à savoir un ressort 7, une barre antiroulis 8 et éventuellement des butées 10.

Le calcul du signal $FE_1$ ayant été décrit ci-dessus, il suffit de se référer à cette description pour obtenir les autres signaux de force verticale élastique $FE_2$ à $FE_4$ correspondant aux trois autres zones de coin de la caisse 2. Seules changent, à chaque fois, les données de raideur devant être utilisées et les modules de calcul correspondants. Ainsi, le signal $FE_2$ est obtenu à partir des signaux de position 31F et les signaux $FE_3$ et $FE_4$ sont obtenus à partir des signaux de position 31R des éléments de support de roue arrière. A chaque fois, la force verticale élastique $FE_i$ est évaluée en tant qu'écart par rapport à la situation d'équilibre statique des ressorts supportant le poids de la masse suspendue du véhicule 1.

La convention de signe utilisée pour calculer les signaux de force de consigne $FC_i$ et les signaux de force élastique $FE_i$ est la même, à savoir par exemple qu'une force positive tend à faire descendre la zone de coin correspondante de la caisse 2 et une force négative tend à la faire monter.

Pour chaque zone de coin de la caisse 2, un module soustracteur 36 forme le signal de demande de force $D_i = FC_i - FE_i$ qui représente la force verticale positive ou négative que l'on souhaite faire exercer par l'actionneur de suspension 5 correspondant sur la caisse 2.

Chaque signal $D_i$ est passé à un module de décision 37 qui détermine si l'actionneur 5 est en mesure de fournir la force verticale représentée par le signal $D_i$. En effet, les actionneurs de suspension 5 étant des amortisseurs semi-actifs, ils ne peuvent exercer de force que dans le sens opposé à leur sens de déformation instantané. Par exemple, si le sens de déformation instantané d'un amortisseur correspond à un mouvement de compression, c'est-à-dire une diminution de l'élongation de l'amortisseur 5, la force réglable de l'amortisseur est nécessairement orientée dans le sens qui fait monter la caisse 2, du fait de l'origine visqueuse de ladite force. Si à cet instant, le signal $D_i$ est positif, signifiant que le programme de contrôle de la caisse requiert que cette zone de coin soit tirée vers le bas, l'actionneur de suspension 5 ne peut pas satisfaire à cette demande et agit même nécessairement à l'encontre de l'objectif du programme de contrôle de caisse à cet instant. Pour cette raison, le module de décision 37 opère ainsi :

- il reçoit le signal de vitesse verticale relative $rv_i$ qui indique le sens de variation de l'élongation de l'amortisseur 5. La convention de signe qui est utilisée pour la vitesse verticale relative $rv_i$ consiste par exemple en ce que la vitesse $rv_i$ est positive en rebond, c'est-à-dire lorsque l'amortisseur s'allonge.
- il compare les signes des signaux $rv_i$ et $D_i$,
- si ces signes sont opposés, indiquant que l'amortisseur 5 est dans un cadran de travail actif, le module 37 produit le signal de commande 15 de manière à réduire au minimum l'effort d'amortissement de l'amortisseur correspondant,
- si ces signes sont égaux, indiquant que l'amortisseur 5 est dans un cadran de travail passif, le module 37 produit le signal de commande 15 de manière à régler l'effort d'amortissement de l'amortisseur 5 correspondant en fonction de la valeur absolue de la force, représentée par le signal $D_i$.

Les signaux de commande 15, par exemple sous la forme de signaux à modulation de largeur d'impulsion, sont transmis par des lignes 38 à un circuit d'interface de sortie 39, qui route les signaux 15 vers les amortisseurs 5.

Le fonctionnement du dispositif de suspension semi-actif ci-dessus décrit va maintenant être expliqué en référence à la figure 3. Sur cette figure, plusieurs grandeurs sont représentées en fonction du temps t au cours d'un événement, choisi à titre purement illustratif et non limitatif, dans lequel une roue 3 du véhicule 1 rencontre une bosse. La courbe 42 représente le débattement vertical de l'amortisseur 5 correspondant par rapport à sa position d'équilibre statique. La courbe 41 représente la vitesse relative $rv_i$ entre l'élément de support de roue 6 et la zone de coin correspondante de la caisse 2, c'est-à-dire la dérivée temporelle de la courbe 42. La courbe 40 représente la vitesse modale absolue de pompage H' de la caisse 2. Le niveau des signaux à origine correspond à la situation d'équilibre statique à l'horizontal de la caisse 2.

De l'instant d'impact à l'instant $t_1$, la jambe de force 4 se comprime et la caisse 2 commence à monter. La force d'amortissement de l'amortisseur 5 est orientée vers le haut : l'amortisseur 5 est dans un cadran de travail actif. L'unité de commande 13 règle son effort d'amortissement au minimum, par exemple en ouvrant au maximum un canal entre la chambre de compression et la chambre de rebond de l'amortisseur.

La force verticale de consigne $FC_i$ correspondant à l'amortisseur 5 considéré ici dépend des détails du programme du module 21. Toutefois, on peut considérer qu'elle est généralement positive dans ce type de circonstances, à savoir que le programme de contrôle requiert que la caisse 2 soit tirée vers le bas pour s'opposer à son mouvement de pompage. Qualitativement, la force verticale de consigne $FC_i$ peut donc être considérée en général comme semblable à la courbe 40.

L'intervalle de l'instant $t_1$ à l'instant $t_2$ correspond au mouvement de rebond de l'amortisseur 5, tandis que la caisse 2 continue à monter. L'amortisseur 5 est donc dans un cadran de travail passif. La force verticale de consigne $FC_i$ est positive. L'unité de commande 13 règle l'effort de l'amortisseur 5 en fonction de la demande de force $D_i$ correspondante. Dans un premier temps, correspondant à la zone 43, le ressort 7 est comprimé au-delà de sa position d'équilibre statique, de sorte que la force verticale élastique $FE_i$ correspondante est négative, la barre de torsion n'étant pas prise en compte dans l'exemple représenté. La zone 43 correspond donc à la situation $|D_i|>|FC_i|$. La prise en compte de la force du ressort 7 conduit à commander l'amortisseur 5 de manière à fournir un plus grand effort d'amortissement que dans le procédé de commande de l'art antérieur, étant donné que le ressort 7 agit à l'encontre de la force d'amortissement de l'amortisseur 5 sur toute la zone 43.

Dans un second temps, correspondant à la zone 44, le ressort 7 est étiré au-delà de sa position d'équilibre statique, de sorte que la force verticale élastique $FE_i$ correspondante est positive. La zone 44 correspond donc à la situation $|D_i|<|FC_i|$. La prise en compte de la force du ressort 7 conduit alors à commander l'amortisseur 5 de manière à fournir un plus faible effort d'amortissement que dans le procédé de commande de l'art antérieur, étant donné que le ressort 7 agit dans le même sens que la force d'amortissement de l'amortisseur 5 sur la zone 44. Après l'instant $t_2$, l'amortisseur 5 est à nouveau dans un cadran de travail actif et son effort d'amortissement est réglé au minimum.

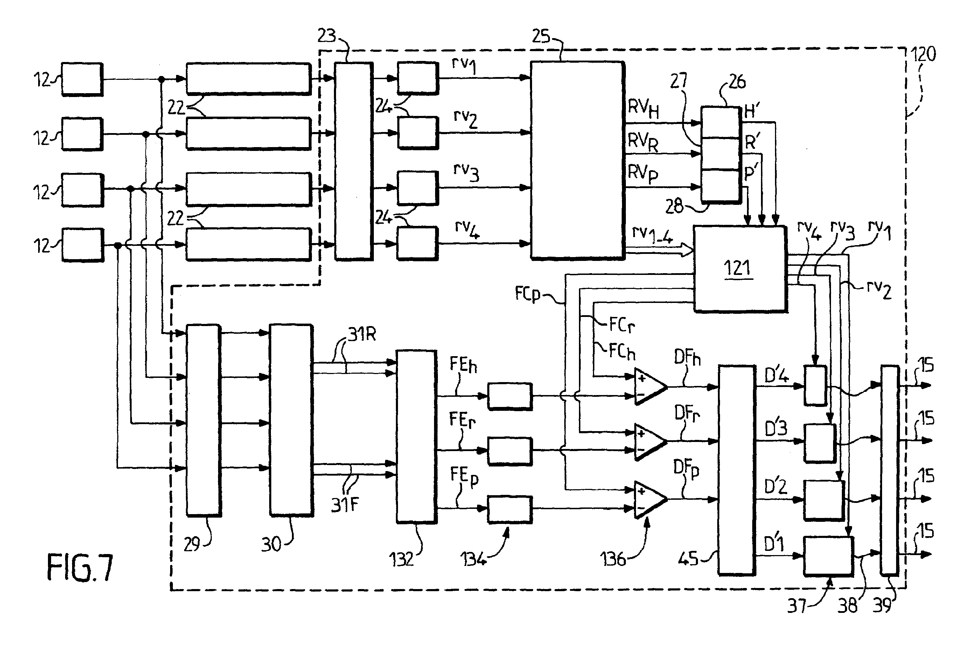

En référence à la figure 7, on décrit maintenant un deuxième mode de réalisation de l'unité de commande 13, dans lequel le micro contrôleur 120 est modifié par rapport au microcontrôleur 20. Les mêmes chiffres de référence désignent des éléments identiques à ceux du premier mode de réalisation, de sorte qu'on pourra se reporter à la description précédente à leur égard.

Les signaux de position normalisés 31F et 31R des roues sont transmis à un module de détermination des forces élastiques modales 132. Le module 132 utilise des paramètres de raideur modaux qui représentent la réaction de l'ensemble des ressorts 7, des barres antiroulis 8 et des butées 10 aux déplacements de la caisse 2 selon les modes de pompage, de roulis et de tangage. Ces paramètres de raideur peuvent être acquis, pour un modèle de véhicule donné, par mesure en laboratoire d'essai. Ils sont préalablement mémorisés dans le microcontrôleur 120, par exemple sur la chaîne de production du véhicule. A partir de ces paramètres de raideur et des signaux de position normalisés 31F et 31R des roues, le module 132 calcule une force élastique de pompage $FE_h$ qui représente, au niveau du centre de gravité G de la masse suspendue du véhicule, la résultante des contributions de tous les organes élastiques précités au mode de pompage, en termes d'écart par rapport à la position d'équilibre statique de la caisse 2. Le module 132 calcule aussi un moment élastique de roulis $FE_r$ qui représente la résultante au niveau du centre de gravité G des contributions de tous les organes élastiques précités au mode de roulis et un moment élastique de tangage $FE_p$ qui représente la résultante au niveau du centre de gravité G des contributions de tous les organes élastiques précités au mode de tangage.

Les signaux de force $FE_r$, $FE_h$ et $FE_p$ sont soumis à un filtrage passe-haut et à une correction de phase par des modules 134 fonctionnant de manière similaire aux modules 34 du premier mode de réalisation.

Par ailleurs, le module de calcul des forces de consigne modifié 121 utilise les signaux de vitesse absolue H', R' et P' et les signaux de vitesse relative $rv_1$ à $rv_4$ pour calculer des forces de consigne modales $FC_h$ selon le mode de pompage, $FC_r$ selon le mode de roulis et $FC_p$ selon le mode de tangage. La méthode de calcul est similaire à celle mise en oeuvre par le module 21, mais avec des gains sélectionnés différemment.

Pour chaque mode de déplacement, un module soustracteur 136 forme le signal $DF_i = FC_i - FE_i$ (i=h, r, p) qui représente la force modale correspondante que l'on souhaite faire exercer par les amortisseurs 5 sur la caisse 2. Les signaux de force modale $DF_h$, $DF_r$ et $DF_p$ sont passés à un module de conversion géométrique 45 qui calcule un signal de demande de force correspondant $D'_i$ pour chacun des amortisseurs 5. Les opérations effectuées par le module 45 répondent aux formules :

$$D'1=DF_h-DF_p*a/(a+b)+DF_r*T/2$$

$$D'2=DF_h-DF_p*a/(a+b)-DF_r*T/2$$

$$D'3=DF_h+DF_p*b/(a+b)-DF_r*T/2$$

$$D'4=DF_h+DF_p*b/(a+b)+DF_r*T/2$$

Les signaux $D'_i$ (i=1 à 4) sont passés aux modules de décision 37 pour être utilisés comme les signaux $D_i$ du premier mode de réalisation.

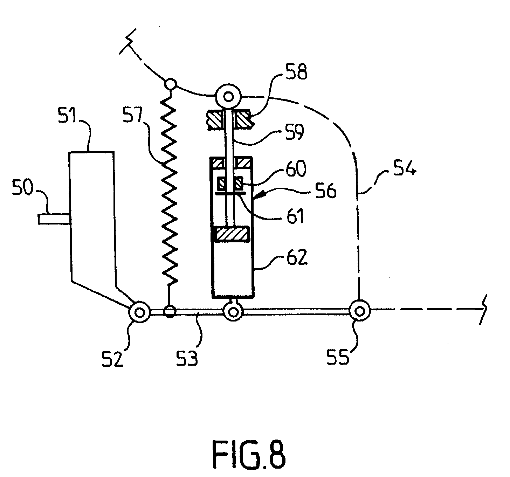

La figure 8 représente schématiquement un exemple d'assemblage mécanique faisant intervenir plusieurs types de ressorts entre une roue et la caisse d'un véhicule. La roue non représentée se fixe sur l'arbre 50 du porte-moyeu 51 dont l'extrémité inférieure est liée à un bras de suspension inférieur 53 par une articulation 52, qui peut être une articulation élastique cylindrique ou une rotule. Un bras de suspension supérieur n'est pas représenté pour la clarté du dessin. Le bras de suspension 53 est lié à la caisse 54 par articulation élastique cylindrique 55. L'amortisseur semi-actif 56 est interposé entre le bras de suspension 53 et la caisse 54, en parallèle avec un ressort 57. L'amortisseur semi-actif 56 comporte deux types de butées : une butée de compression 58 cylindrique, par exemple en caoutchouc, qui est fixée à la tête de la tige d'amortisseur 59, et une butée de détente 60, par exemple en matière plastique, qui est monté autour de la tige 59 dans le cylindre 62 et soutenue par une rondelle 63 sertie sur la tige 59. La butée de détente 60 peut aussi prendre la forme d'un ressort hélicoïdal monté autour de la tige 59 dans le cylindre 62. Au cours des débattements verticaux de la roue, dans cet exemple, plusieurs types de ressorts sont susceptibles d'être sollicités : le ressort 57, l'articulation élastique 55 et, le cas échéant, l'articulation élastique 52, et les butées 58 et 60. Pour la mise en oeuvre de l'invention, on prendra de préférence en compte l'effet de tous ces ressorts. L'exemple représenté sur la figure 8 n'est nullement exhaustif. d'autres types de ressorts peuvent également être prévus, comme des ressorts à lame, barres élastiques, etc.

Sur la figure 8, on n'a pas représenté de barre antiroulis mais la présence de celle-ci n'est pas exclue.

Il arrive qu'on se passe de barre antiroulis sur l'essieu arrière du véhicule. Par ailleurs, on voit bien sur la figure 8 que le débattement vertical de l'amortisseur et le débattement vertical du support de roue sont reliés par un facteur géométrique dépendant de l'implantation de l'amortisseur.

Il existe de nombreux types connus d'assemblages mécaniques faisant fonction d'amortir les mouvements verticaux des supports des roues par rapport à la caisse ; la présente demande n'a pas vocation à les énumérer de manière exhaustive. En fonction de l'assemblage utilisé dans un véhicule donné, et en fonction des organes élastiques mis en oeuvre dans cet assemblage, il est à la portée de l'homme du métier d'adapter les modes de réalisation décrits ci-dessus en intégrant les caractéristiques de raideur de ces organes élastiques dans la programmation de l'unité de commande 13. Il n'est pas nécessaire de prendre en compte strictement tous les ressorts car, en fonction des objectifs de précision fixés, il est possible de circonscrire la prise en compte aux ressorts ayant l'effet le plus important, du fait de leur raideur et/ou de l'amplitude de leurs sollicitations.

Le dispositif de suspension semi-actif ci-dessus a été décrit en détails quant au contrôle de la caisse du véhicule selon le principe du « chariot aérien ». Toutefois, un tel dispositif de suspension peut également remplir d'autres fonctions de contrôle, comme le contrôle des roues, le contrôle de stabilité et la gestion de l'énergie. L'invention n'exclut pas la présence de ces autres contrôles ayant des objectifs complémentaires ou alternatifs au contrôle de la caisse selon le principe du « chariot aérien ». La mise en oeuvre de multiples programmes de contrôle en fonction des événements intérieurs et extérieurs affectant l'état dynamique du véhicule est à la portée de l'homme du métier.

Dans toute la description, le terme « vertical » a été utilisé pour désigner la direction de débattement des amortisseurs 5, étant entendu que cette direction ne correspond pas nécessairement à la verticale au sens strict du terme mais dépend de l'assemblage mécanique utilisé entre la roue et la caisse.

Les microcontrôleurs programmés 20 et 120, et plus généralement l'unité de commande 13, peuvent être réalisés sous la forme d'une combinaison de composants matériels et/ou logiciels. Un module peut être réalisé sous forme matérielle et/ou logicielle, en un ou plusieurs composants. Par ailleurs, deux modules ne correspondent pas forcément à deux composants matériels ou logiciels séparés.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention revendiquée.

**Revendications**

1. Procédé de commande d'un actionneur de suspension (5) à force réglable dans un véhicule automobile (1), ledit véhicule comprenant des roues (3) portées par des supports de roue (6) respectifs liés de manière mobile à une masse suspendue (2) dudit véhicule, ledit actionneur de suspension étant interposé entre un desdits supports de roue et ladite masse suspendue pour exercer une force verticale réglable, au moins un ressort (7, 8, 10) étant aussi interposé entre ledit support de roue et ladite masse suspendue, ledit procédé comportant les étapes consistant à :

   déterminer au moins une force verticale de consigne ($FC_i$) devant être appliquée entre ladite masse suspendue (2) et au moins ledit support de roue (6) pour réduire des mouvements verticaux de ladite masse suspendue du véhicule, déterminer au moins un déplacement vertical (Z) entre ladite masse suspendue et au moins ledit support de roue,

   **caractérisé par** les étapes consistant à :

   déterminer, en fonction dudit au moins un déplacement vertical, au moins une force verticale élastique ($FE_i$) exercée au moins par ledit au moins un ressort (7, 8, 10) entre ladite masse suspendue et au moins ledit support de roue, calculer une demande de force ($D_1$, $D'_1$) à fournir par ledit actionneur de suspension en fonction de ladite au moins une force verticale de consigne et de ladite au moins une force verticale élastique.

2. Procédé selon la revendication 1, **caractérisé par le fait que** ladite au moins une force verticale élastique est déterminée à partir de données de raideur prédéfinies (33) dudit au moins un ressort.

3. Procédé selon la revendication 1 ou 2, **caractérisé par le fait que** ledit au moins un ressort inclut une barre anti-roulis (8) couplant ledit support de roue à un support de roue opposé sur le même essieu dudit véhicule, ledit procédé comportant l'étape consistant à déterminer un déplacement vertical entre ledit support de roue opposé et ladite masse suspendue, ladite force verticale élastique exercée par ladite barre anti-roulis étant déterminée en fonction des déplacements verticaux (31F, 31R) des deux supports de roue (6).

4. Procédé selon l'une des revendications 1 à 3, **caractérisé par le fait que** ladite demande de force ($D_1$) est produite en fonction de la différence entre une force verticale de consigne ($FC_1$) devant être appliquée entre ladite masse suspendue et ledit support de roue et une force verticale élastique ($FE_1$) exercée par ledit au moins un ressort entre ladite masse suspendue et ledit support de roue.

5. Procédé selon l'une des revendications 1 à 3, **caractérisé par le fait que** ladite au moins une force verticale de consigne ($FC_h$, , $FC_r$ , $FC_p$) et ladite au moins une force verticale élastique ($FE_h$ , $FE_r$ , $FE_p$) sont déterminées de manière modale selon au moins un mode de mouvement prédéterminé de ladite masse suspendue, ladite demande de force ($D'_1$) étant produite en fonction de la différence ($DF_h$ , $DF_r$ , $DF_p$) entre ladite ou chaque force verticale de consigne modale et ladite ou chaque force verticale élastique modale correspondante.

6. Procédé selon l'une des revendications 1 à 5, **caractérisé par le fait que** ledit actionneur de suspension à force réglable est un amortisseur (5) à amortissement réglable, ledit procédé comportant en outre les étapes consistant à :

   déterminer le sens de ladite demande de force ($D_1$, $D'_1$), déterminer le sens de variation ($rv_1$) de l'élongation dudit amortisseur, comparer lesdits sens, régler ledit amortisseur (5) en fonction de ladite demande de force uniquement lorsque lesdits sens sont opposés.

7. Dispositif de suspension pour un véhicule automobile comprenant des roues portées par des supports de roue respectifs liés de manière mobile à une masse suspendue dudit véhicule, ledit dispositif comprenant :

   un actionneur de suspension (5) à force réglable interposé entre un desdits supports de roue (6) et ladite masse suspendue (2) pour exercer une force verticale réglable, au moins un ressort (7, 8, 10) aussi interposé entre ledit support de roue et ladite masse suspendue, un capteur (11) sensible à un déplacement vertical (Z) entre ladite masse suspendue et ledit support de roue, et des moyens de commande (13) pour appliquer un signal de commande (15) audit actionneur de suspension, lesdits moyens de commande incluant :

   des moyens de détermination de force verticale de consigne (21, 121) pour déterminer au moins une force verticale de consigne ($FC_i$) devant être appliquée entre ladite masse suspendue et au moins ledit support de roue pour réduire des mouvements verticaux de ladite masse suspendue du véhicule, **caractérisé par le fait que** lesdits moyens de commande incluent :

des moyens de détermination de force verticale élastique (32, 132) pour déterminer, en fonction dudit déplacement vertical au moins, au moins une force verticale élastique ($FE_i$) exercée au moins par ledit au moins un ressort entre ladite masse suspendue et au moins ledit support de roue,
des moyens de calcul de demande de force (36, 136) pour calculer une demande de force ($D_i$, $D'_i$) à fournir par ledit actionneur de suspension en fonction de ladite au moins une force verticale de consigne et de ladite au moins une force verticale élastique.

8. Dispositif selon la revendication 7, **caractérisé par le fait que** lesdits moyens de détermination de force verticale élastique (32, 132) contiennent des données de raideur prédéfinies (33) dudit au moins un ressort.

9. Dispositif selon la revendication 7 ou 8, **caractérisé par le fait que** ledit au moins un ressort inclut un ressort (7) monté en parallèle avec ledit actionneur de suspension (5).

10. Dispositif selon l'une des revendications 7 à 9, **caractérisé par le fait que** ledit au moins un ressort inclut une barre antiroulis (8) couplant ledit support de roue à un support de roue opposé sur le même essieu dudit véhicule, ledit dispositif comportant en outre un capteur (11) sensible à un déplacement vertical entre ladite masse suspendue et ledit support de roue opposé, lesdits moyens de détermination de force verticale élastique (32B) étant aptes à déterminer ladite force verticale élastique exercée par ladite barre antiroulis en fonction des déplacements verticaux (31F) des deux supports de roue (6).

11. Dispositif selon l'une des revendications 7 à 10, **caractérisé par le fait que** ledit actionneur de suspension à force réglable est un amortisseur (5) à amortissement réglable, lesdits moyens de commande incluant en outre un comparateur (37) pour comparer le sens de ladite demande de force ($D_1$, $D'_1$) et le sens de variation ($rv_1$) de l'élongation dudit amortisseur, lesdits moyens de commande (37) étant aptes à régler ledit amortisseur (5) en fonction du résultat de ladite comparaison.

FIG.1

FIG.2

FIG.3

FIG.4

FIG.5

FIG.6

FIG.7

FIG.8

**Office européen
des brevets**

**RAPPORT DE RECHERCHE EUROPEENNE**

Numéro de la demande

EP 04 29 0026

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 999 868 A (BENO JOSEPH H  ET AL) 7 décembre 1999 (1999-12-07) * colonne 2, ligne 55 - colonne 3, ligne 47 * * colonne 4, ligne 24-42 * * colonne 5, ligne 54-61 * * colonne 6, ligne 62-64 * * colonne 7, ligne 23-29 * * colonne 7, ligne 43-50 * * figure 7 * | 1-11 | B60G17/08 |
| X | ----- US 2002/084599 A1 (CHARAUDEAU JEAN-JACQUES ET AL) 4 juillet 2002 (2002-07-04) * abrégé * * alinéas [0010],  [0011] * * alinéa [0022] * | 1,2,7,8 | |
| D,A | ----- US 5 510 988 A (FRATINI JR ALBERT V  ET AL) 23 avril 1996 (1996-04-23) * revendication 1 * | 1,7 | |
| A | ----- US 6 298 293 B1 (OHSAKU SATORU) 2 octobre 2001 (2001-10-02) * colonne 1, ligne 52 - colonne 2, ligne 24 * | 1,7 | DOMAINES TECHNIQUES RECHERCHES (Int.Cl.7) B60G |
| A | ----- PATENT ABSTRACTS OF JAPAN vol. 0102, no. 46 (M-510), 23 août 1986 (1986-08-23) & JP 61 075008 A (TOKICO LTD), 17 avril 1986 (1986-04-17) * abrégé * | 1,6,7,11 | |
| A | ----- FR 2 687 201 A (SIEMENS AUTOMOTIVE SA) 13 août 1993 (1993-08-13) * page 5, ligne 33 - page 6, ligne 26 * ----- -/-- | 6,11 | |

Le présent rapport a été établi pour toutes les revendications

| Lieu de la recherche | Date d'achèvement de la recherche | Examinateur |
|---|---|---|
| La Haye | 9 juin 2004 | Schultze, Y |

CATEGORIE DES DOCUMENTS CITES

X : particulièrement pertinent à lui seul
Y : particulièrement pertinent en combinaison  avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

  ..................................................................................
& : membre de la même famille, document  correspondant

EPO FORM 1503 03.82 (P04C02)

**Office européen
des brevets**

**RAPPORT DE RECHERCHE EUROPEENNE**

Numéro de la demande

EP 04 29 0026

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 986 568 A (GALTIER LUCIEN ET AL) 22 janvier 1991 (1991-01-22) * abrégé * ----- | 3,10 | |
| A | US 5 295 074 A (WILLIAMS DAVID A) 15 mars 1994 (1994-03-15) * colonne 5, ligne 47-60 * ----- | 1,7 | |
| A | US 6 206 152 B1 (GRUNDEI MANFRED ET AL) 27 mars 2001 (2001-03-27) * abrégé * * colonne 1, ligne 66 - colonne 2, ligne 17 * ----- | 3,10 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| La Haye | 9 juin 2004 | Schultze, Y |

EPO FORM 1503 03.82 (P04C02)

**ANNEXE AU RAPPORT DE RECHERCHE EUROPEENNE**
**RELATIF A LA DEMANDE DE BREVET EUROPEEN NO.**  EP 04 29 0026

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-06-2004

| Document brevet cité au rapport de recherche | | Date de publication | Membre(s) de la famille de brevet(s) | | Date de publication |
|---|---|---|---|---|---|
| US 5999868 | A | 07-12-1999 | AU | 2055697 A | 10-09-1997 |
| | | | WO | 9730858 A2 | 28-08-1997 |
| US 2002084599 | A1 | 04-07-2002 | FR | 2814985 A1 | 12-04-2002 |
| | | | AT | 261827 T | 15-04-2004 |
| | | | BR | 0104496 A | 28-05-2002 |
| | | | DE | 60102335 D1 | 22-04-2004 |
| | | | EP | 1197362 A1 | 17-04-2002 |
| | | | JP | 2002192931 A | 10-07-2002 |
| US 5510988 | A | 23-04-1996 | EP | 0718131 A1 | 26-06-1996 |
| US 6298293 | B1 | 02-10-2001 | JP | 3424591 B2 | 07-07-2003 |
| | | | JP | 2000289424 A | 17-10-2000 |
| | | | DE | 10016896 A1 | 19-10-2000 |
| | | | FR | 2794067 A1 | 01-12-2000 |
| JP 61075008 | A | 17-04-1986 | JP | 1898176 C | 23-01-1995 |
| | | | JP | 6015287 B | 02-03-1994 |
| FR 2687201 | A | 13-08-1993 | FR | 2687201 A1 | 13-08-1993 |
| | | | DE | 69306550 D1 | 23-01-1997 |
| | | | DE | 69306550 T2 | 15-05-1997 |
| | | | WO | 9315924 A1 | 19-08-1993 |
| | | | EP | 0625101 A1 | 23-11-1994 |
| US 4986568 | A | 22-01-1991 | FR | 2624803 A1 | 23-06-1989 |
| | | | DE | 3873504 D1 | 10-09-1992 |
| | | | DE | 3873504 T2 | 04-02-1993 |
| | | | EP | 0322275 A1 | 28-06-1989 |
| | | | JP | 1204813 A | 17-08-1989 |
| | | | JP | 3066028 B2 | 17-07-2000 |
| US 5295074 | A | 15-03-1994 | CA | 2054206 A1 | 06-11-1990 |
| | | | DE | 69010681 D1 | 18-08-1994 |
| | | | DE | 69010681 T2 | 23-02-1995 |
| | | | EP | 0470991 A1 | 19-02-1992 |
| | | | ES | 2061035 T3 | 01-12-1994 |
| | | | WO | 9013448 A1 | 15-11-1990 |
| | | | JP | 2997044 B2 | 11-01-2000 |
| | | | JP | 4505141 T | 10-09-1992 |
| US 6206152 | B1 | 27-03-2001 | DE | 19809611 A1 | 09-09-1999 |

EPO FORM P0460

Pour tout renseignement concernant cette annexe : voir Journal Officiel de l'Office européen des brevets, No.12/82